(19)

Europäisches
Patentamt
European
Patent Office
Office européen
des brevets

(11) **EP 1 883 172 A1**

(12) **EUROPEAN PATENT APPLICATION**

(43) Date of publication:
**30.01.2008 Bulletin 2008/05**

(51) Int Cl.:
*H04B 10/18* (2006.01)

(21) Application number: **06291224.1**

(22) Date of filing: **26.07.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **Alcatel Lucent
75008 Paris (FR)**

(72) Inventors:
• **Antona, Jean-Christophe
92120 Montrouge (FR)**

• **Lavigne, Bruno
92160 Antony (FR)**
• **Bigo, Sébastien
91300 Massy (FR)**

(74) Representative: **Wörz, Volker Alfred
Dreiss, Fuhlendorf,
Steimle & Becker,
Postfach 10 37 62
70032 Stuttgart (DE)**

(54) **Dispersion management in WDM optical networks**

(57)     The invention refers to a method and a system for transmitting wavelength-division multiplexed, hereinafter referred to as WDM, optical signals, comprising the steps of:

(a) transmitting a WDM optical signal by means of a transmitter (1) to a receiver (2), across optical nodes (3, 4) disposed between the transmitter (1) and the receiver (2);

(b) transmitting the WDM optical signal across a node section (7) disposed between two adjacent optical nodes (3, 4), hereinafter referred to as input node (3) at the beginning of a node section (7) and as output node (4) at the end of the node section (7);

(c) amplifying the WDM optical signal by means of optical repeaters (8) disposed on the node section (7);

(d) providing at least one line fiber span (9) disposed between two adjacent optical repeaters (8) each with at least one line fiber (9); and

(e) providing a post-compensation Dispersion Compensation Module (13), hereinafter referred to as post-DCM, disposed after the last line fiber span (9) of the node section (7) and localized at the output node (4).

In order to provide node architecture avoiding a chromatic dispersion reset and enhancing performance, it is suggested to set the post-DCM (13) to a value which makes the overall residual dispersion over the node section (7) comprising the cumulated dispersions over the line fiber spans (9), and the post-DCM (13), unequal to zero and in absolute value lower than the product between the number (S) of line fiber spans (9) in the node section (7) and over the cumulated dispersion over the (S-1) first line fiber spans (9) divided by (S-1).

Fig. 1

EP 1 883 172 A1

## Description

The present invention refers to an optical node of an optical transmission system, the transmission system adapted for transmitting wavelength-division multiplexed (WDM) optical signals, the optical node comprising:

> (a) at least one input for incoming optical signals;
> (b) at least one output for outgoing optical signals; and
> (c) a post-compensation Dispersion Compensation Module (post-DCM) disposed at each of the at least one inputs of the optical node.

The present invention also refers to an optical transmission system adapted for transmitting wavelength-division multiplexed (WDM) optical signals comprising:

> (a) at least one transmitter, at least one receiver, and optical nodes disposed there between;
> (b) at least one node section disposed between two adjacent optical nodes, hereinafter referred to as input node at the beginning of a node section and as output node at the end of the node section;
> (c) the at least one node section comprising at least one line fiber span separated by optical repeaters;
> (d) the optical nodes comprising a post-compensation Dispersion Compensation Module (post-DCM) disposed after the last line fiber span of the node section, and localized at the output node.

Further, the invention refers to a method for transmitting wavelength-division multiplexed (WDM) optical signals, comprising the steps of:

> (a) transmitting a WDM optical signal by means of a transmitter to a receiver, across optical nodes disposed between the transmitter and the receiver;
> (b) transmitting the WDM optical signal across a node section disposed between two adjacent optical nodes, hereinafter referred to as input node at the beginning of a node section and as output node at the end of the node section;
> (c) amplifying the WDM optical signal by means of optical repeaters disposed on the node section and possibly by optical amplifiers at the node sites;
> (d) providing at least one line fiber span disposed between two adjacent optical repeaters; and
> (e) providing a post-compensation Dispersion Compensation Module (post-DCM) disposed after the last line fiber span (9) of the node section (7) and localized at the output node.

The system of the above-mentioned kind is used for transmission of WDM (Wavelength Division Multiplexing)-signals. WDM enables the utilization of a significant portion of the available fiber bandwidth by allowing many independent signals to be transmitted simultaneously in one fiber. Actually, the WDM channels can be routed and detected independently, with the wavelength determining the communication path by acting as the signature address of the origin, destination, or routing. Therefore, the basic system architecture that can take the full advantage of WDM technology is an important issue. The network topology can be of any known kind, including point-to-point links, star, ring and mesh networks.

Long-haul optical transmission systems used to include in-line repeaters for retiming, reshaping, and regenerating information signals at appropriate intervals along the fiber-optic transmission path. Nowadays, with optical amplifiers disposed within the node sections between two adjacent nodes, in-line repeaters are no longer needed. While earlier regenerative repeaters convert optical signals back to electrical form before performing such signal processing functions, today's mainstream systems employ a linear, optical fiber amplifier that amplifies light signals purely in the optical domain. The use of optical amplifiers in place of regenerative circuits drastically reduces the number of components required in repeater equipment, resulting in a significant cost reduction and reliability improvement.

Recent years have also seen great leaps in the capacity of optical networks, mainly because of the development of wavelength-division multiplexing (WDM) technologies. WDM systems transmit many signals simultaneously on a single fiber, using different optical wavelengths. The combined use of WDM and optical amplification techniques has made it possible to send and receive large amounts of data over a great distance in the most economical way. In such modern optical transmission systems, however, chromatic dispersion and nonlinear effects in optical fibers become increasingly problematic, as the communications market dictates higher optical signal power, longer transmission distances, and denser wavelength channels. How to deal with chromatic dispersion and nonlinear effects is a key issue in designing a high-speed high-capacity optical transmission line.

So-called DWDM (Dense Wavelength Division Multiplexing) transmissions are severely impaired by inter-channel non-linear effects, like Cross-Phase Modulation (XPM), Four-Wave Mixing (FWM) at channel bit rates lower than 40 Gbit/sec. Such impairments are enhanced in most optical network solutions, where the physical design is such that the cumulated chromatic dispersion is reset to the same value at the input of each optical node (OADM (Optical Add/Drop Multiplexer), ROADM (Reconfigurable Optical Add/Drop Multiplexer), WSS (Wavelength Selective Switches), etc.).

The most important optical fiber characteristic after transmission loss is dispersion or so-called intersymbol interference. This refers to the broadening of optical pulses as they propagate along a fiber. As pulses broaden, they tend to interfere with adjacent pulses; this limits the maximum achievable data rate. The main dispersive effect in single-mode fibers usually used in short haul, long haul and ultra-long haul optical transmission systems is chromatic dispersion. Chromatic dispersion occurs because different wavelengths of light propagate at different velocities in the fiber. Chromatic dispersion is an important effect, even given the relatively narrow spectral width of most laser diodes, because the width of the signal spectrum (which means different frequencies, then different wavelengths) widely comes from the modulation.

Chromatic dispersion is a phenomenon that causes the separation of a light wave into its spectral components and thus usually broadens the pulse width as it propagates through a fiber medium. Non-linear effects come from the non-linear response of the glass medium affected by the incoming light signal power which in turns affects the signal. Such chromatic dispersion and non-linear effects must be mitigated to sufficiently low levels to realize almost distortion-free long-distance transport of optical pulses.

Chromatic dispersion can, in fact, be canceled by placing dispersion compensating fibers (DCFs) or modules (DCMs) on the optical path, so that the total cumulated dispersion becomes low enough to be acceptable. With DCMs placed at appropriate intervals along the link, we talk of "dispersion management", and it is known that a dispersion-managed transmission line not only prevents the propagating optical pulses from suffering dispersion distortion, but also alleviates nonlinear effects on them.

To mitigate propagation problems (for example dispersion, single channel and multi-channel non-linear effects), "dispersion management" is used: it consists in distributing smartly along the line the dispersion compensation, usually and practically in a periodic way. After each line fiber span, in-line Dispersion Compensation Modules (DCM) are inserted, as well as at transmitter side and receiver side. Those in-line DCMs are either set to compensate for an average ratio of the dispersion accumulated in a fiber span, or so that the accumulated dispersion in both the line fiber span and the DCM is constant, from one span to another. Additionally, the cumulated dispersion (parting from the transmitter output) can be reset to a fixed value before a line fiber span or at a node input/output, using a specific DCM.

In existing network solutions, installed or in publications, two different strategies can be made out:

In the first known strategy the node does not aim to change the strategy of dispersion accumulation from amplifier span to amplifier span, such that the cumulated dispersion from the input node to the output node will depend on the number of spans and on the number of nodes (since the cumulated dispersion per amplifier span is commonly not targeted to zero, which is a performance worst case). It results that, if no adaptive, tunable Dispersion Compensating modules (DCMs) or devices at the receiver end are used, the overall residual dispersion of the transmission can vary significantly, depending on the transmission length. The range of the system may be rapidly limited by this divergence of cumulated dispersion.

According to the second strategy, the node strategy usually consists in resetting the cumulated dispersion parting from the transmitter-node to a same value at each node input or output, or regularly before a line fiber (or amplifier) span. In doing so, it can be ensured that the residual (or cumulated) dispersion (from the transmitter-node to the last node of the transmission) can easily be controlled, whatever the number of amplifier spans or nodes of a light-path is. Nevertheless, such a strategy will enhance non-linear detrimental effects (mainly XPM and FWM).

The first solution suffers from the divergence of residual dispersion and the resulting complexity for the network management of light-paths that do not have the same residual dispersion at all. And the second solution, which is widely shared, suffers from XPM and FWM drawbacks.

It is, therefore, an object of the present invention to provide node architecture avoiding chromatic dispersion reset, in order to enhance WDM (Wavelength Division Multiplexing) systems performance.

According to the present invention, this object is solved by an optical transmission system of the above-identified kind, wherein the post-Dispersion Compensating Module (DCM) is set to a value which makes the overall residual dispersion along a node section linking the node to an adjacent node - the overall residual dispersion of the node section being the sum of the cumulated dispersions along at least one line fiber span of the node section and of the cumulated dispersion along the post-DCM - unequal to zero and in absolute value lower than the product between the number S of line fiber spans in the node section and the cumulated dispersion along the S-1 first line fiber spans divided by S-1.

The strategy according to the present invention consists of defining a target cumulated dispersion from node to node (for each node section), that is unequal to zero for the whole multiplex signal to be transmitted (more than 10 ps/nm), and lower (in absolute value) than the product between the number S of line fiber spans in the node section and the cumulated dispersion along the S-1 first line fiber spans and the following inline DCMs divided by s-1.

In doing so, the complexity of the known first strategy for the network management of the light-path is avoided while at the same time it is assured that the cumulated dispersion will increase (or decrease, according to the choice of dispersion map) slowly with the number of nodes from the transmitter-node to the end of the light-path. Hence, the detrimental effects of XPM and FWM are mitigated.

This can be achieved in the following way: Looking at different channels at different wavelengths, due to chromatic dispersion, these channels do not propagate at the same speed. Thus, if two pulses are considered, each on its own wavelength, they will interact with each other (due to non-linearities) only over a short distance. This is due to the different speeds and to the power fading due to attenuation. If the cumulated dispersion between two nodes was zero or approximately zero, the average speeds of the different channels would be identical, which means that the two pulses were in the same initial conditions regarding time, power, and phase at the output of both nodes. Then, the interaction (or interference) would add up constructively, and it is very detrimental for the signal recovery. This, however, can be avoided by the present invention.

The solution according to the present invention brings strong advantages for low dispersion fibers, and offers a significant performance increase with respect to the widely used known second solution even for large dispersion fibers such as the standard SMF (single mode fiber), for 10Gbit/sec transmissions.

To ensure that the residual dispersion of the link remains acceptable at the receiver side, a pre-compensation (pre-DCM)/post-compensation (post-DCM) couple may be needed in order to allow good performance over long distances.

According to a preferred embodiment of the invention the optical nodes of the transmission system each comprise a pre-compensation fiber (pre-DCM) disposed at each of the at least one outputs of the optical node, the dispersion compensation value of the pre-DCM depending on the characteristics of the node section, and wherein the overall residual dispersion of the node section also includes the cumulated dispersion along the pre-DCM.

Further, preferably the line fiber spans of the node sections are each separated by repeaters, each optical repeater comprising an inline Dispersion Compensation Module (inline-DCM), wherein the overall residual dispersion of the node section also includes the cumulated dispersions along the inline-DCMs and the pre-DCM if present, and wherein the post-DCM is set to a value which makes the overall residual dispersion of said node section in absolute value lower than the product between the number S of line fiber spans in the node section and the cumulated dispersion along the S-1 first line fiber spans and the inline-DCMs divided by S-1.

The optical nodes of the optical transmission system according to the present invention can comprise Add Dispersion Compensation Modules (Add-DCMs) and/or Drop Dispersion Compensation Modules (Drop-DCMs). Transmitters are connected to the transmission system by means of the Add-DCMs and receivers are connected to the transmission system by means of the Drop-DCMs. Transmission of the WDM-signals across the transmission system is accomplished from one transmitter across a certain number of nodes to a receiver. Usually, one or more of the nodes comprises a Drop-DCM and either an Add-DCM or a Pre-DCM. It is possible that the dispersion compensation effect of the Add-DCM is accomplished by the Pre-DCM or vice versa, that the dispersion compensation effect of the Pre-DCM is accomplished by the Add-DCM. So for a proper functioning of the optical transmission system only either an Add-DCM or a Pre-DCM is needed. However, it is possible, that each node of the transmission system is equipped with an Add-DCM and a Pre-DCM.

The dependent claims refer to advantageous and preferred embodiments of the present invention. Their features and advantages will become apparent in detail from the drawings when taking into consideration the following description of the drawings. In particular, the drawings show:

Fig. 1 a basic node architecture to fulfill the present invention;

Fig. 2 a dispersion map avoiding Dispersion Reset at the node locations;

Fig. 3 a basic node architecture to fulfill a first strategy known from the prior art;

Fig. 4 a typical regular dispersion map over an optical SMF (Single Mode Fiber) for the first strategy according to Fig. 3;

Fig. 5 a dispersion map with dispersion reset at the node locations for a second strategy known from the prior art;

Fig. 6 OSNR (Optical Signal-to-Noise Ratio) penalty evolution versus non-linear phase in the case of the second strategy known from the prior art;

Fig. 7 Q (quality)-factor evolution versus wavelength or channel in the case of the second strategy known from the prior art compared to the strategy according to the present invention; and

Fig. 8 a node architecture of an optical node according to the present invention.

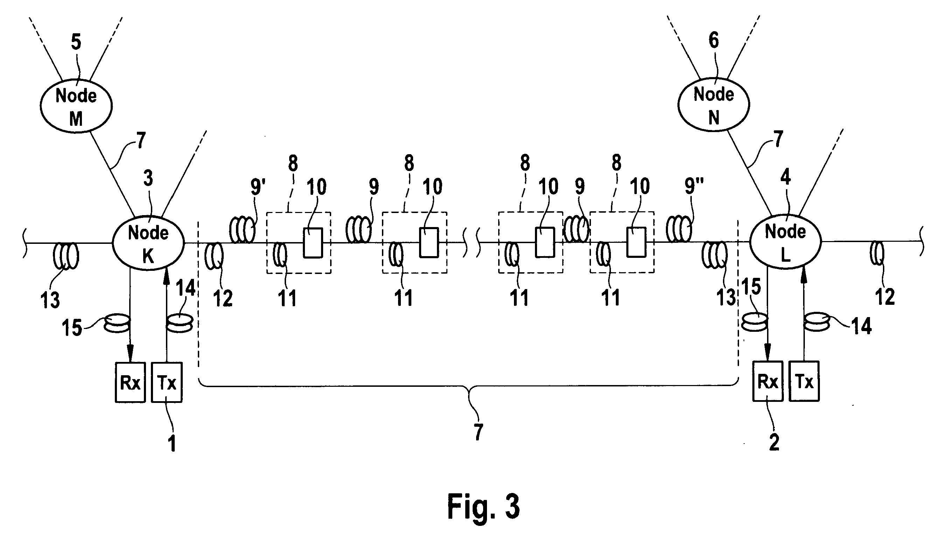

Fig. 3 shows a basic node architecture of an optical transmission system known from the prior art. The system comprises at least one transmitter (Tx) 1 and at least one receiver (Rx) 2, and a number of optical nodes 3, 4, 5, 6 comprising at least one input node 3 and at least one output node 4. The transmission system is adapted for transmitting optical WDM (Wavelength Division Multiplexing)-signals from the transmitter 1 to the receiver 2. There are so-called node sections 7 disposed between two adjacent optical nodes 3, 4; 3, 5; 4, 6; etc. of the transmission system.

The node section 7 between input node 3 and output node 4 comprises a number of line fiber spans 9 separated from each other by repeaters 8. Each repeater site 8 comprises amplifiers 10 and inline Dispersion Compensating Modules (DCMs) 11. Usually, the line fiber 9 has a positive local dispersion, and the inline-DCM 11 has a negative dispersion. The inline-DCM 11 is located at the repeater site 8, for example at an inter-stage of a double-stage amplifier in a terrestrial system.

The transmission system further comprises a pre-compensation fiber 12 (pre-DCM) located at an output of input node 3, before the first line fiber span 9', and possibly within an amplifier structure of the node 3.

Finally, the DCM of the last span 9" of the node section 7 is called a post-compensation DCM 13 (post-DCM) located at an input of the output node 4 and possibly within an amplifier structure of the node 4. According to one aspect of the invention, the pre-DCMs 12 and/or the post-DCMs 13 may comprise tunable dispersion compensation devices, such as Gires-Tournois etalon plates or fiber Gragg gratings.

The output node 4 in the embodiment shown in Fig. 3 comprises an OADM (Optical Add/Drop-Multiplexer) for adding (14) one or more channels to the transmitted optical signal or for dropping (15) one or more channels from the transmitted optical signal. The transmitter 1 is connected to the input node 3 by means of the Add-DCM 14, and the receiver 2 is connected to the output node 4 by means of the Drop-DCM 15. The OADM is transparent, which means that the signal stays in the optical domain when it crosses such a node. Except for the added or dropped channels, the signal entering the input node 3 is optically forwarded substantially unchanged (apart from possible effects like filtering or crosstalk). The OADM can extract one or more channels to be dropped from the incoming signal and forwards them to its drop ports, then possibly to drop-DCMs 15, and eventually to opto-electronic receivers 2. The OADM can forward from its add ports one or more channels (generated by WDM transmitters 1, then possibly passed through an Add-DCM 14) to be added to the incoming signal and couples them into the signal passing through before it is forwarded to the next node.

In a node section 7 that does not comprise any repeaters 8, there is only one span 9 between input node 3 and output node 4. The pre-DCM 12 comes before the span 9 and is part of the input node 3. The span 9 is followed by the post-DCM 13, which makes part of the output node 4. A node section 7 that comprises only one repeater 8 comprises two spans 9' and 9". The first span 9' is located between the input node 3 and the repeater 8, and the second span 9" is located between the repeater 8 and the output node 4. The first span 9' would be preceded by a pre-DCM 12 and followed by the inline-DCM 11. The pre-DCM 12 is part of the input node 3 and comes before the first span 9'. The inline-DCM 11 is disposed at the repeater site 8. The second span 9" is followed by the post-DCM 13 which makes part of the output node 4.

A node section 7 that comprises two or more repeaters 8 is divided into a first span 9', a last span 9" and at least one further span 9. The first span 9' is located between the input node 3 and the first repeater 8, and the last span 9" is located between the last repeater 8 and the output node 4. The one or more middle spans 9 are each located between two adjacent repeaters 8. The first span 9' is preceded by a pre-DCM 12, which makes part of the input node 3. The middle spans 9 comprise an inline-DCMs 11 which are located at the repeater sites 8. The last span 9" is followed by a post-DCM 13 which is located at the output node 4. It is possible to integrate the dispersion compensation characteristics of a pre-DCM 12 and an Add-DCM 14 into a single DCM 12 disposed at the input node 3 or into a single DCM 14 disposed between the transmitter 1 and an add port of the input node 3, the DCM 14 making part of the input node 3. Just the same, it is possible to integrate the dispersion compensation characteristics of a post-DCM 13 and a Drop-DCM 15 into a single DCM 13 disposed at the output node 4 or into a single DCM 15 disposed between a drop port of the output node 4 and the receiver 2, the DCM 15 making part of the output port 4.

Each node section 7, no matter how it is designed, in particular irrespective how many repeaters 8 and how many spans 9 it comprises, has a so-called cumulated or residual dispersion made up of all the DCMs 11 to 15 contained in the respective node section 7.

Preferably, the value of the residual dispersion per span 9 is the same for each of the at least one amplifier spans 9 of a node section 7. Alternatively, the value of the residual dispersion per span 9 can be the same for different spans 9 of different node sections 7. Of course, the value of the residual dispersion per span 9 can differ from one node section 7 to another if the characteristics of the line fiber change, i.e. the type of fiber, its material, its length, etc.

In the example shown in Fig. 3, the transmission of the optical WDM-signals is effected from the transmitter 1 across the input node 3, the node section 7, and the output node 4 to the receiver 2. However, it is emphasized that the invention also refers to optical transmission systems in which the signal transmission path comprises more than two nodes (one or more intermediate nodes apart from the input node and the output node) and more than one node section each disposed between two adjacent nodes.

So-called DWDM (Dense Wavelength Division Multiplexing) transmissions are severely impaired by inter-channel non-linear effects, like Cross-Phase Modulation (XPM), Four-Wave Mixing (FWM) at channel bit rates lower than 40 Gbit/sec. Such impairments are enhanced in most optical network solutions, where the physical design is such that the cumulated chromatic dispersion is reset to the same value at the input of each optical node (such as OADM (Optical Add/Drop Multiplexer), ROADM (Reconfigurable Optical Add/Drop Multiplexer), WSS (Wavelength Selective Switches), etc.).

To mitigate propagation problems (for example dispersion, single channel and multi-channel non-linear effects), dispersion management is used: in the example shown in Fig. 3 it consists in distributing along the node sections 7 the dispersion compensation in a periodic way. In existing network solutions, installed or in publications, two different strategies can be made out:

In the first known strategy (see Fig. 3) the output node 4 does not aim to change the strategy of dispersion accumulation from amplifier span 9 to amplifier span 9, such that the cumulated dispersion from the input node 3 to the output node 4 will depend on the number of spans 9 and on the number of nodes 3, 4, across which the transmission is performed (since the cumulated dispersion per amplifier span 9 is commonly not targeted to zero, which is a performance worst case). Hence, according to the first strategy, the cumulated dispersion per node-section 7 with fixed pre-compensating fibers 12 and fixed post-compensating fibers 13 is the same for each node-section 7 no matter how many spans 9 there are. It results that, if no adaptive, tunable Dispersion Compensating modules (DCMs) 12, 13 or devices at the receiver end 2 are used, the overall residual dispersion of the transmission across a node section 7 can vary significantly, depending on the transmission length. The range of the system may be rapidly limited by this divergence of cumulated dispersion.

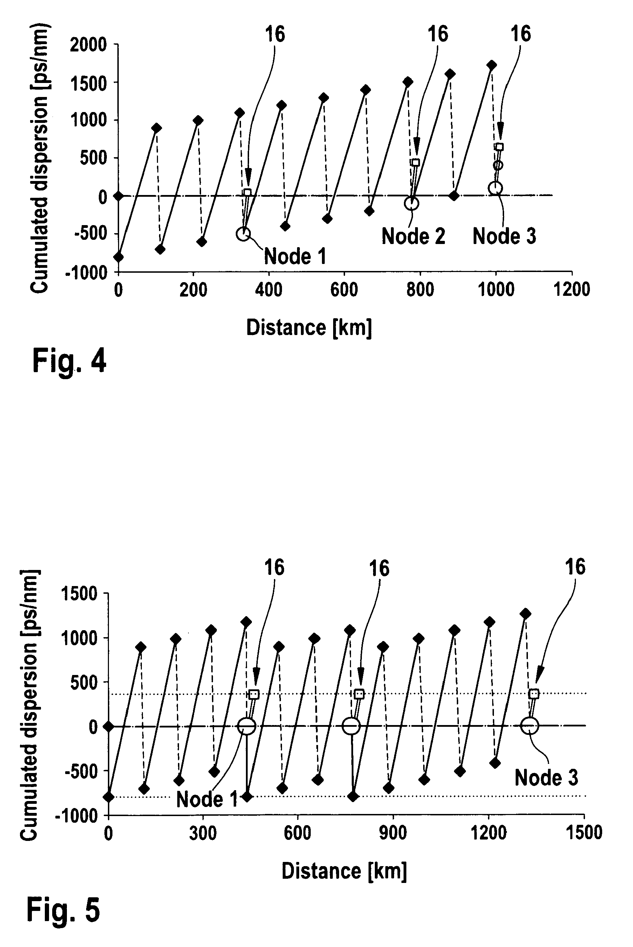

Dispersion maps are used to represent a profile of chromatic dispersion accumulated along the length of an optical transmission line from a transmitter 1 to a receiver 2. Fig. 4 shows a typical regular dispersion map over an optical SMF (Single Mode Fiber) for the first strategy of the prior art transmission system according to Fig. 3. The x-axis refers to the distance between the transmitter 1 and the receiver 2 at the end of the transmission link. The unit of the distance is kilometers (km). The transmission link comprises an input node 3 disposed at approximately 0 km, an output node 4 (Node #3) at approximately 1000 km and two intermediate nodes (Node #1 at approximately 330 km, and Node #2 at approximately 780 km) there between. The y-axis refers to the cumulated dispersion of the node sections 7. The unit of the dispersion is picoseconds (ps)/ nanometers (nm). Dropped channels are indicated by means of the reference sign 16. It can be clearly seen in Fig. 4 that the cumulated dispersion of the node section 7 between two adjacent nodes is not reset to zero, but rather remains substantially unchanged.

A second strategy usually consists in resetting the cumulated dispersion to a fixed value (e.g. 0 ps/nm) at the node sites (Node #1, Node #2, Node #3). The respective dispersion map is shown in Fig. 5. The cumulated dispersion is reset at an input or an output of each of the nodes. Alternatively, the cumulated dispersion is reset regularly before a line fiber span 9', 9, 9". In doing so, it can be ensured that the residual (or cumulated) dispersion (from the transmitter 1 to the receiver 2 of the transmission) across the node section 7 can be easily controlled, whatever the number of spans 9 or nodes 3, 4 of a light-path is. Nevertheless, such a strategy will enhance non-linear detrimental effects (mainly XPM and FWM). It can be clearly seen in Fig. 5 that the cumulated dispersion of the node sections 7 between two adjacent nodes steadily increases (to approximately 350 ps/nm) and then is reset to zero at each node site.

The first solution suffers from the divergence of residual dispersion and the resulting complexity for the network management of light-paths that do not have the same residual dispersion at all. And the second solution, which is widely shared, suffers from XPM and FWM drawbacks.

It is, therefore, an object of the present invention to provide node architecture avoiding chromatic dispersion reset, in order to enhance WDM (Wavelength Division Multiplexing) systems performance.

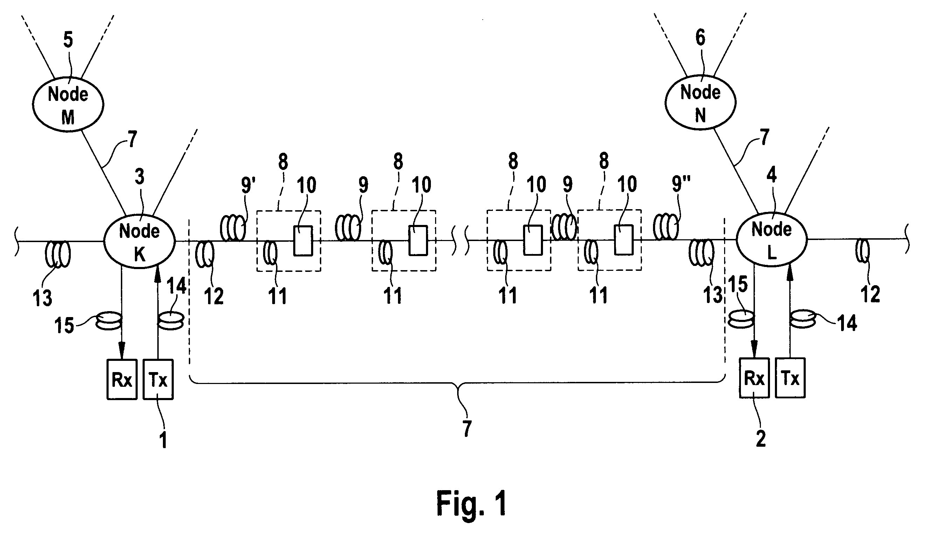

This object is solved by an optical transmission system of the kind shown in Fig. 1. According to the present invention, the post-Dispersion Compensating Module (DCM) 13 is set to a value which makes the overall residual dispersion along each of the node sections 7 of the transmission link between the transmitter 1 and the receiver 2 unequal to zero, the overall residual dispersion of a node section 7 comprising the cumulated dispersions along the line fiber spans 9 of the node section, and the post-DCM 13. If present, the overall residual dispersion additionally comprises the pre-DCM 12, the inline-DCMs 11, the Add-DCMs 14, and the Drop-DCMs 15 located within the node section 7.

The following definitions are used throughout the present document. A node section 7 is a transmission support between two adjacent nodes 3, 4, which for better understanding of the invention, without however implying any limitation to their functionality, can be called input node 3 and output node 4. The nodes 3, 4 include output and input ports of the nodes 3, 4 (as well as pre-DCMs 12 and post-DCMs 13 respectively), and a concatenation of S line fiber spans 9 (S > 0) separated by repeaters 8 from one another. The repeater sites 8 comprise inline-DCMs 11. An amplifier span 9 comprises a repeater site 8 with the inline-DCM 11. A residual (or cumulated) dispersion per node section 7 (RDPN) is the cumulated dispersion along the whole node section 7. An average residual dispersion per span 9 (RDPS) is the cumulated dispersion along an amplifier span 9, averaged over all the amplifier spans 9', 9 of the node section 7, except the last amplifier span 9" (before the output node 4).

The transmitter 1 multiplexes SONET, SDH, ATM, or other given optical signals using wavelength-division multiplexing (WDM) techniques and sends the resultant optical signals over the optical transmission link to the receiver 2. The receiver 2 receives these multiplexed signals and splits them back into individual optical signals with different wavelengths for processing in later stages. The optical transmission link across the node section 7 employs a plurality of optical amplifiers 8. The chromatic dispersion of optical signals is managed at appropriate dispersion compensation intervals.

The strategy for managing the chromatic dispersion of the optical signals according to the present invention consists of defining a target value for the cumulated dispersion of a node section 7 between two adjacent nodes 3, 4. The target value defers from zero for the whole multiplexed signal to be transmitted, in particular it defers from zero for every transmitted channel. Preferably, the target value of the residual dispersion along each node section 7 defers from zero by more than 10 ps/nm for each channel in absolute value. In particular it defers from zero by a value between 100 ps/nm and 500 ps/nm. However, at the same time the target value for the cumulated dispersion of a node section 7 should not exceed (in absolute value) the product between the number S of line fiber spans 9', 9, 9" between two consecutive nodes 3, 4 (within the node section 7) and the cumulated dispersion along the (S-1) first line fiber spans 9 and the following inline DCMs 11, divided by (S-1). Additionally, there could be some Add/Drop DCMs 14, 15, which would have to be taken into consideration when calculating the cumulated dispersion, too.

With other words, according to the present invention, the post-DCM 13 is set to a value which makes the overall residual dispersion along the node section 7 comprising the cumulated dispersions along the line fiber spans 9, the pre-DCM 12, the inline-DCMs 11, and the post-DCM 13 smaller than the product of the overall number S of amplifier spans 9 of the considered node section 7 and the average cumulated dispersion along an amplifier span 9 of the node section 7. The average cumulated dispersion over an amplifier span 9 is calculated by summing up the residual dispersions for a number of spans 9 and dividing the sum by the number S of spans 9. According to the invention, averaging is performed for all spans 9', 9 of a node section 7 except for the last span 9" of the section 7.

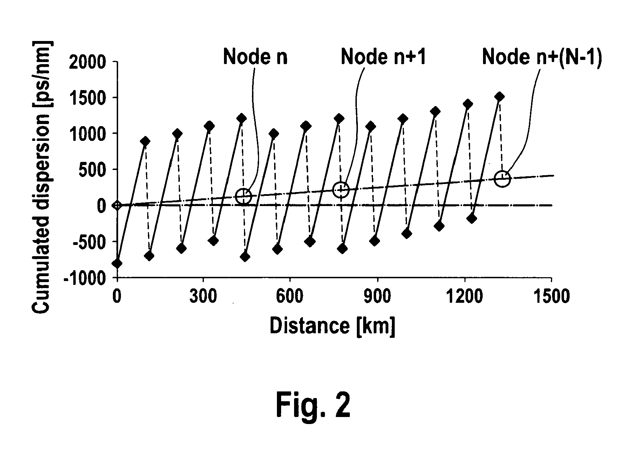

In doing so, the complexity of the known first strategy for the network management of the light-path is avoided while at the same time it is assured that the cumulated dispersion of the node section 7 will increase (or decrease, according to the choice of the dispersion map; see Fig. 2) slowly with the number of nodes 3, 4 from the transmitter 1 and the input node 3 to the end of the light-path at the output node n+(N-1) and the receiver 2. Hence, the detrimental effects of XPM and FWM are mitigated. To ensure that the residual dispersion of the transmission link remains acceptable at the receiver side (output node 4 and receiver 2), a pre-compensation (pre-DCM) 12 and post-compensation (post-DCM) 13 couple at the input node 3 and the output node 4, respectively, may be needed in order to allow good performance over long distances.

An important aspect of the present invention is the fact that the residual dispersion at each node does no longer have to be reduced by a certain value (see Fig. 4) or to a certain value (see Fig. 5). Instead, the DCMs 11 to 15, which are able to affect the transmission properties of a node section 7, in particular the dispersion characteristics of the node section 7, are adapted in order to achieve an overall residual dispersion for the node section 7 of a given target value, the target value deferring from zero at least by 10 ps/nm, for example. Another important aspect is that the DCM 12 at the input of the node section 7 (i.e. the pre-DCM 12) is approximately the same at any of the node sections 7 of the transmission system and that inline DCMs 11 are all but the last adjusted to maintain more or less an average value of residual dispersion per span 9 (typically +/- 50 to 150 ps/nm/span), while the DCM 13 at the node section output (i.e. the post-DCM 13) is set to guarantee a given value of cumulated dispersion per node section 7.

The solution according to the present invention brings strong advantages for low dispersion fibers, and offers a significant performance increase with respect to the widely used known second solution even for large dispersion fibers such as the standard SMF (single mode fiber), for 10 Gbit/sec transmissions. The advantages for low dispersion fibers are originated in the reduction of the impact of XPM and FWM, which are particularly strong for low dispersion fibers. With other words, if the chromatic dispersion is low, then the speeds of the channels are almost the same, and thus pulses can interact from one channel to another over longer distances. If the dispersion is zero, then FWM adds up constructively very rapidly. Fig. 2 shows a dispersion map avoiding a dispersion reset at the node locations and the dispersion slowly rising from node to node.

While Fig. 1, for the sake of simplicity, only shows a unidirectional transmission link between transmitter 1 and receiver 2, or input node 3 and output node 4 respectively, most implementations of the optical transmission system will have upstream and downstream links to make two-way communication possible. In that case each end station (input and output nodes 3, 4) employ both transmitter 1 and receiver 2.

The node architecture according to the present invention, for example, assumes that there is a preset value for the pre-DCM 12 and/or for the Add-DCM 14. The post-DCM 13 is set such that the cumulated dispersions along the node section 7 (corresponding to the sum of the cumulated dispersion along the pre-DCM 12, the inline-DCM 11, the post-DCM 13, the add-DCM 14, and the drop-DCM 15 of the considered node section 7) is close or substantially equal to the desired target value. The desired target value of the cumulated dispersion per node section 7 ($D_c$/node) is substantially unequal to zero. In particular the following equation applies:

$$10\,[ps/nm] < |D_c/node| < S \cdot D_c/span$$

with "$D_c$/node" corresponding to the cumulated dispersion of a node section 7, "S" corresponding to the number of amplifier spans 9, and "$D_c$/span" being the cumulated dispersion along the (S-1) first line fiber spans 9', 9 in the node section 7 and the following inline DCMs 11, "S·$D_c$/

span" constituting a high boundary. The high boundary is set in order to prevent the cumulated dispersion from rising (in absolute values) at the same pace at each span 9, which would correspond to a regular dispersion map, as illustrated in Fig. 4.

The overall cumulated dispersion of the node sections 7 can be adapted by setting the DCMs 11 to 15 to fixed values according to the dispersion characteristics in the node sections 7 in order to obtain the desired target value for the cumulated dispersion of the node sections 7. Alternatively, one or more of the DCMs 11 to 15 can be tunable, in order to set the cumulated dispersion by adapting the dispersion characteristics of the tunable DCMs 11 to 15. Tuning of the tunable DCMs 11 to 15 can be performed before operation of the transmission system or adaptively during operation. The DCMs 11 to 15, which can be set or adapted in order to obtain the desired cumulated dispersion for the node sections 7 are provided and operable for one or more channels.

According to the invention, a design rule is suggested for building the transmission link between the transmitter 1 and the receiver 2 effectively. A practical implementation in setting a target value for the residual dispersion per node section 7 (non-zero, i.e. > 10 ps/nm, but also with a high boundary), and a way for adjusting pre-DCM 12, post-DCM 13, and inline-DCMs 11 is suggested.

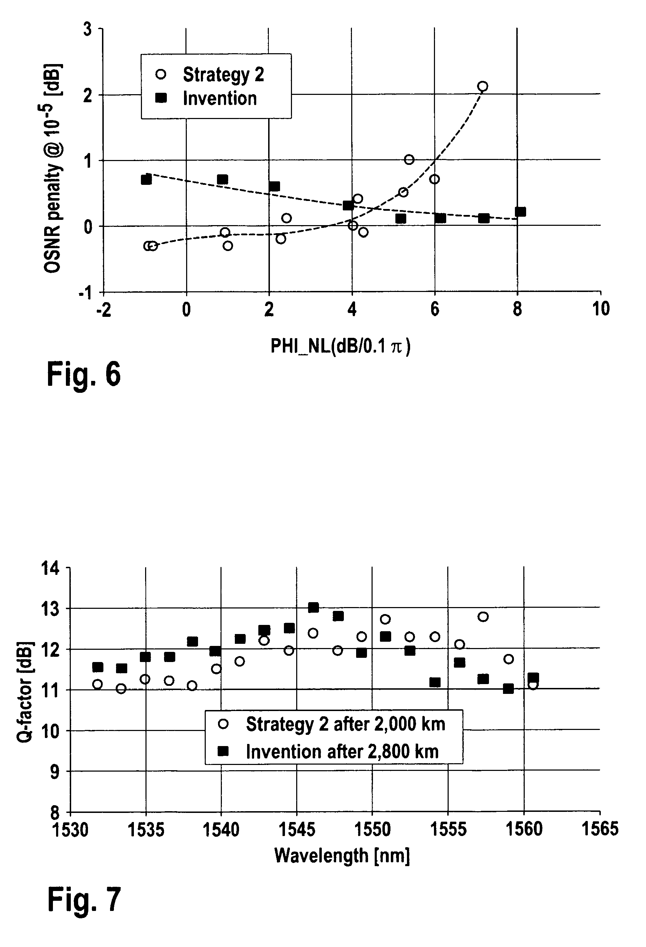

The present invention brings strong advantages for low dispersion fibers, and additionally has a significant performance increase with respect to the widely used second solution described above even for large dispersion fibers such as the standard SMF fiber, for 10 Gbit/sec transmissions. Fig. 6 depicts the measurement of the OSNR (Optical Signal to Noise Ratio) penalty with respect to the non-linear phase. Such a measurement quantifies the robustness of the system to non-linearities. Two strategies are compared: the known second strategy with a dispersion reset at each node 1, 2 (open circles) and the strategy according to the present invention (full squares), i.e. without dispersion reset at the node location and with the introduction of fixed negative dispersion fiber 5 at the receiver side. As can be seen in Fig. 6, there is an increase of the non-linear phase at a 1 dB OSNR penalty from 6 dB/0,1¶ to a value larger than 8 dB/0,1¶. This yields to a significant increase of the non-linear threshold $P_{th}$ from 15.5 dBm of the known second strategy to a value larger than 17 dBm of the strategy according to the invention, where the non-linear threshold $P_{th}$ corresponds to the power level required to induce an OSNR penalty of 1 dB during propagation in a line fiber span 9', 9, 9".

Applying the solution according to the present invention to a 40x10 Gbit/sec 100 GHz-spaced WDM transmission system composed of 4x100 km long SMF spans 9 and setting 2,5 dBm per channel power enables to improve the transmission reach by at least 40% - from 2000 km to at least 2800 km - as can be seen on Fig. 7, the maximum reach limited by the set-up in the last case.

Fig. 7 shows the Q-factor evolution versus wavelength or channel in the case of the known second strategy (open circles) and the strategy according to the invention (full squares).

The solution according to the invention is particularly interesting since the control of the residual dispersion of the light paths can be continued (more loosely than in the known second solution, but until an acceptable value is defined) while improving the system's reach and thus reducing the required number of OEO (optical-electrical-optical) regenerators in an optical network, thus saving capital expenditure.

An experimental demonstration has revealed a significant improvement of the non-linear threshold - from 15.5 dBm to a value larger than 17 dBm (limited by the set-up) - in a SMF-based 10 Gbit/sec transmission system incorporating a double-period dispersion map. The idea is to avoid periodic dispersion reset (at the ROADM locations) and to introduce a fixed negative dispersion fiber at the receiver side. Experimentally applying this solution to a 40×10 Gbit/sec 100 GHz-spaced WDM-transmission system composed of 4×100 km-long SMF spans and setting 2.5 dBm per channel power enables to improve the transmission reach by at least 40% - from 2,000 km to at least 2,800 km -, the maximum reach being limited by the set-up in the last case.

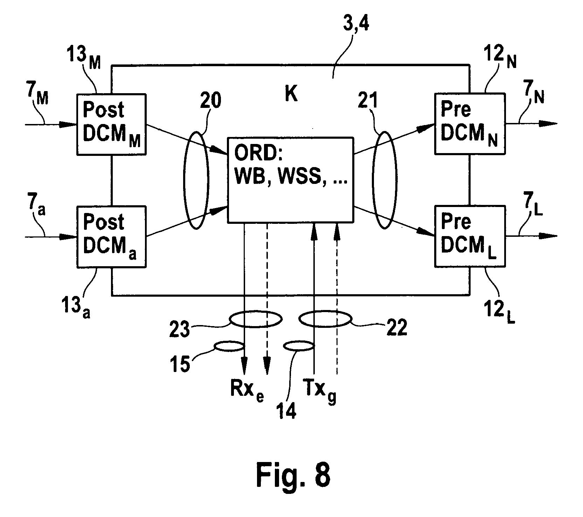

Fig. 8 shows the architecture of an optical node 3, 4 according to the present invention. The node 3, 4 is part of an optical transmission system, for example like the one shown in Fig. 1. Node 3, 4 shown in Fig. 8, could be, for example, correspond to Node K of Fig. 1. The node 3, 4 comprises various functional blocks of an optical routing device (ORD), such as a wavelength blocker (WB), a wavelength selective switch (WSS), etc. It may also include other devices such as a multiplexer/ demultiplexer or amplifiers.

The node 3, 4 comprises a number of input ports 20 for incoming signals from other nodes (node sections 7). Node sections 7 from other nodes 5, 6, for example Node M and another Node a (not shown in Fig. 1), are connected to node 3, 4 by means of the input ports 20. In particular, node section 7_M from Node M is connected to one input port 20 and node section 7_a from another Node a is connected to another input port 20. Further, the node 3, 4 comprises a number of output ports 21 for departing or outgoing signals to other nodes (node sections 7). Node sections 7 to other nodes 5, 6, for example Node L and another Node L are connected to node 3, 4 by means of the output ports 21. In particular, node section 7_L to Node L is connected to one output port 21 and node section 7_N to another Node N is connected to another output port 21.

Further, the node 3, 4 comprises at its input ports 20 post-DCMs 13, like post-DCM_M and post-DCM_a. According to the present invention, the post-DCMs 13 are set (or tuned) in order to guarantee a target value of residual dispersion per node section 7_M or 7_a respectively. Preferably, the target value is identical all over the transmission system. Besides, it is different from zero and different from the average trend of accumulation of dispersion along the node section 7_M or 7_a, respectively. Furthermore, the node 3, 4 comprises at its output ports 21 pre-DCMs 12, like pre-DCM_N and Pre-DCM_L. The pre-DCMs 12 are either fixed to a certain value for the whole network, or individually set depending on the nature and characteristics of the line fiber in the following node section 7_N or 7_L, respectively.

In addition, the node 3, 4 comprises one or more Add-ports 22 and one or more Drop-ports 23, which are linked to a transmitter Tx and a receiver Rx. The Add-ports 22 may comprise additional Add-DCMs 14, and the Drop-Ports 23 may comprise additional Drop-DCMs 15.

**Claims**

1.  An optical node (3; 4) of an optical transmission system, the transmission system adapted for transmitting wavelength-division multiplexed, hereinafter referred to as WDM, optical signals, the optical node (3; 4) comprising:

    (a) at least one input for incoming optical signals;
    (b) at least one output for outgoing optical signals; and
    (c) a post-compensation Dispersion Compensation Module (13), hereinafter referred to as post-DCM, disposed at each of the at least one inputs of the optical node (3; 4),

    **characterized in that** the post-DCM (13) is set to a value which makes the overall residual dispersion along a node section (7) linking the node (3; 4) to an adjacent node (4, 5; 3, 6) - the overall residual dispersion of the node section (7) being the sum of the cumulated dispersions along at least one line fiber span (9) of the node section (7) and of the cumulated dispersion along the post-DCM (13) - unequal to zero and in absolute value lower than the product between the number (S) of line fiber spans (9) in the node section (7) and the cumulated dispersion along the (S-1) first line fiber spans (9) divided by (S-1).

2.  The optical node (3; 4) according to claim 1, wherein the node (3; 4) comprises a pre-compensation fiber (12), hereinafter referred to as pre-DCM, disposed at each of the at least one outputs of the optical node (3; 4), the dispersion compensation value of the pre-DCM (12) depending on the characteristics of the node section (7), and wherein the overall residual dispersion of the node section (7) also includes the cumulated dispersion over the pre-DCM (12).

3.  The optical node (3; 4) according to claim 1 or 2, wherein the line fiber spans (9) of the node section (7) are separated by repeaters (8), each optical repeater (8) comprising an inline Dispersion Compensation Module (11), hereinafter referred to as inline-DCM, wherein the overall residual dispersion of the node section (7) also includes the cumulated dispersions along the inline-DCMs (11), and wherein the post-DCM (13) is set to a value which makes the overall residual dispersion of said node section (7) in absolute value lower than the product between the number (S) of line fiber spans (9) in the node section (7) and the cumulated dispersion along the (S-1) first line fiber spans (9) and the inline-DCMs (11) divided by (S-1).

4.  The optical node (3; 4) according to one of the claims 1 to 3, wherein the optical node (3; 4) comprises an add port having Dispersion Compensation characteristics.

5.  The optical node (3; 4) according to one of the claims 1 to 4, wherein the optical node (3; 4) comprises a drop port having Dispersion Compensation characteristics.

6.  The optical node (3; 4) according to one of the preceding claims 1 to 5, **characterized in that** the post-DCM (13) is set to a value which makes the overall residual dispersion over the node section (7) being the sum of the cumulated dispersions along the line fiber spans (9), pre-DCM (12), the inline-DCMs (11), and the post-DCM (13) larger than 10 ps/nm in absolute value for every transmitted channel.

7.  An optical transmission system adapted for transmitting wavelength-division multiplexed, hereinafter referred to as WDM, optical signals comprising:

    (a) at least one transmitter (1), at least one receiver (2), and optical nodes (3, 4) disposed there between;
    (b) at least one node section (7) disposed between two adjacent optical nodes (3, 4), hereinafter referred to as input node (3) at the beginning of a node section (7) and as output node (4) at the end of the node section (7);
    (c) the at least one node section (7) comprising at least one line fiber span (9) separated by optical repeaters (8);
    (d) the optical nodes (3, 4) comprising a post-compensation Dispersion Compensation Module (13), hereinafter referred to as post-DCM, disposed after the last line fiber span (9) of the node section (7), and localized at the output node (4),

    **characterized in that** the post-DCM (13) is set to a value which makes the overall residual dispersion over the node section (7), being the sum of the cumulated dispersions along the at least one line fiber span (9) and of the cumulated dispersion along the post-DCM (13), unequal to zero and in absolute value lower than the product between the number (S) of line fiber spans (9) in the node section (7) and the cumulated dispersion along the (S-1) first line fiber spans (9) divided by (S-1).

8. The optical transmission system according to claim 7, wherein the node (3; 4) comprises a pre-compensation fiber (12), hereinafter referred to as pre-DCM, disposed at each of the at least one outputs of the optical node (3; 4), the dispersion compensation value of the pre-DCM (12) depending on the characteristics of the node section (7), and wherein the overall residual dispersion of the node section (7) comprises the cumulated dispersions along the pre-DCMs (12).

9. The optical transmission system according to claim 7 or 8, wherein the line fiber spans (9) of the node section (7) are separated by repeaters (8), each optical repeater (8) comprising an inline Dispersion Compensation Module (11), hereinafter referred to as inline-DCM, wherein the overall residual dispersion of the node section (7) comprises the cumulated dispersions along the inline-DCMs (11), and wherein the post-DCM (13) is set to a value which makes the overall residual dispersion in absolute value lower than the product between the number (S) of line fiber spans (9) in the node section (7) and the cumulated dispersion along the (S-1) first line fiber spans (9) and the inline-DCMs (11) divided by (S-1).

10. The optical transmission system according to one of the claims 7 to 9, **characterized in that** the at least one line fiber span (9) has a positive local dispersion.

11. The optical transmission system according to claim 9 or 10, **characterized in that** the inline-DCMs (11) have a negative local dispersion.

12. The optical transmission system according to one of the claims 9 to 11, **characterized in that** the inline-DCM (11) of each of the at least one optical repeater (8) is set such that the residual dispersion per span, i.e. the cumulated dispersion along the line fiber span (9) preceding the repeater (8) and the inline-DCM (11), substantially corresponds to a specified target value of residual dispersion per span (9).

13. The optical transmission system according to one of the claims 8 to 12, **characterized in that** the pre-DCM (12) has substantially the same value for all node sections (7) in the optical transmission system.

14. The optical transmission system according to one of the claims 7 to 13, **characterized in that** the value of the residual dispersion per span (9) is the same for each of the at least one span (9) of a node section (7).

15. The optical transmission system according to one of the claims 7 to 14, **characterized in that** the value of the residual dispersion per span (9) is the same for different spans (9) of different node sections (7).

16. The optical transmission system according to one of the claims 7 to 15, **characterized in that** the pre-DCM (12) and/or the post-DCM (13) is a tunable dispersion compensation device like fiber Bragg gratings or Gires-Tournois etalon plates.

17. The optical transmission system according to one of the preceding claims 7 to 16, **characterized in that** the input node (3) comprises an add port having Dispersion Compensation characteristics.

18. The optical transmission system according to claim 17, **characterized in that** the add port at the input node (3) comprises a Dispersion Compensation Module (14), hereinafter referred to as Add-DCM, for example a dispersion compensation fiber with a negative dispersion sign and/or a tunable dispersion compensation device like fiber Bragg gratings or Gires-Tournois Etalon plates.

19. The optical transmission system according to one of the preceding claims 7 to 18, **characterized in that** the post-DCM (13) is set to a value which makes the overall residual dispersion over the node section (7) being the sum of the cumulated dispersions along the line fiber spans (9), pre-DCM (12), the inline-DCMs (11), and the post-DCM (13) larger than 10 ps/nm in absolute value for every transmitted channel.

20. The optical transmission system according to one of the preceding claims 7 to 19, **characterized in that** at least one of the optical nodes (3, 4) comprises a drop port (15) having Dispersion Compensation characteristics.

21. The optical transmission system according to claim 20,
**characterized in that** the drop port at the optical nodes (3, 4) comprises a Dispersion Compensation Module, hereinafter referred to as drop-DCM (15), for example a dispersion compensation fiber with a negative dispersion sign and/or a tunable dispersion compensation device like fiber Bragg gratings or Gires-Tournois etalon plates.

22. A method for transmitting wavelength-division multiplexed, hereinafter referred to as WDM, optical signals, comprising the steps of:

    (a) transmitting a WDM optical signal by means of a transmitter (1) to a receiver (2), across optical nodes (3, 4) disposed between the transmitter (1) and the receiver (2);

(b) transmitting the WDM optical signal across a node section (7) disposed between two adjacent optical nodes (3, 4), hereinafter referred to as input node (3) at the beginning of a node section (7) and as output node (4) at the end of the node section (7);

(c) amplifying the WDM optical signal by means of optical repeaters (8) disposed on the node section (7);

(d) providing at least one line fiber span (9) disposed between two adjacent optical repeaters (8); and

(e) providing a post-compensation Dispersion Compensation Module (13), hereinafter referred to as post-DCM, disposed after the last line fiber span (9) of the node section (7) and localized at the output node (4),

**characterized by** setting the post-DCM (13) to a value which makes the overall residual dispersion over the node section (7), being the sum of the cumulated dispersions along the line fiber spans (9) and the post-DCM (13), unequal to zero and in absolute value lower than the product between the number (S) of line fiber spans (9) in the node section (7) and the cumulated dispersion along the (S-1) first line fiber spans (9) divided by (S-1).

23. The method according to claim 22, wherein a pre-compensation Dispersion Compensation Module (12), hereinafter referred to as pre-DCM, disposed between the input node (3) and the first line fiber span (9) of the node section (7) is provided at the input node (3), wherein the dispersion compensation value of the pre-DCM (12) depends on the characteristics of the node section (7), and wherein the overall residual dispersion of the node section (7) comprises the cumulated dispersion along the pre-DCM (12).

24. The method according to claim 22 or 23, wherein each optical repeater (8) between adjacent line fiber spans (9) comprises an inline Dispersion Compensation Module (11), hereinafter referred to as inline-DCM, and wherein the overall residual dispersion of the node section (7) comprises the cumulated dispersions along the inline-DCMs (11), and wherein the post-DCM (13) is set to a value which makes the overall residual dispersion of said node section (7) in absolute value lower than the product between the number (S) of line fiber spans (9) in the node section (7) and the cumulated dispersion along the (S-1) first line fiber spans (9) and the inline-DCMs (11) divided by (S-1).

25. The method according to one of the preceding claims 22 to 24, wherein the post-DCM (13) is set to a value which makes the overall residual dispersion over the node section (7) being the sum of the cumulated dispersions along the line fiber spans (9), pre-DCM (12), the inline-DCMs (11), and the post-DCM (13) larger than 10 ps/nm in absolute value for every transmitted channel.

Fig. 1

Fig. 2

Fig. 3

Fig. 4

Fig. 5

**Fig. 6**

**Fig. 7**

**Fig. 8**

**European Patent Office**

## EUROPEAN SEARCH REPORT

Application Number

EP 06 29 1224

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 035 671 A2 (KDD CORP [JP]; KDD SUBMARINE CABLE SYS INC [JP]) 13 September 2000 (2000-09-13) * abstract * * figures 1(A),1(B),2(A),2(B),4,5 * ----- | 1-25 | INV. H04B10/18 |
| X | EP 1 241 809 A (KDDI SUBMARINE CABLE SYSTEMS I [JP]) 18 September 2002 (2002-09-18) * figures 1,2 * ----- | 1-25 | |
| X | EP 1 229 676 A2 (KDDI SUBMARINE CABLE SYSTEMS I [JP]) 7 August 2002 (2002-08-07) * figures 1,2 * ----- | 1-25 | |
| X | EP 1 087 551 A2 (KDD CORP [JP]; KDD SUBMARINE CABLE SYS INC [JP]) 28 March 2001 (2001-03-28) * figures 2(a),2(b) * ----- | 1-25 | |
| X | US 2004/179850 A1 (KATAGIRI TORU [JP] ET AL) 16 September 2004 (2004-09-16) * abstract * * figures 2A,2B,3,4A,4B,5 * ----- | 1-25 | TECHNICAL FIELDS SEARCHED (IPC) H04B |

The present search report has been drawn up for all claims

| Place of search | Date of completion of the search | Examiner |
|---|---|---|
| Munich | 15 December 2006 | ROLAN CISNEROS, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 29 1224

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2006

| Patent document cited in search report | | | Publication date | Patent family member(s) | | | Publication date |
|---|---|---|---|---|---|---|---|
| EP | 1035671 | A2 | 13-09-2000 | JP<br>JP<br>US | 3567782<br>2000261377<br>6594428 | B2<br>A<br>B1 | 22-09-2004<br>22-09-2000<br>15-07-2003 |
| EP | 1241809 | A | 18-09-2002 | JP<br>US | 2002280959<br>2002131711 | A<br>A1 | 27-09-2002<br>19-09-2002 |
| EP | 1229676 | A2 | 07-08-2002 | CA<br>JP<br>US | 2359553<br>2002232355<br>2002118936 | A1<br>A<br>A1 | 31-07-2002<br>16-08-2002<br>29-08-2002 |
| EP | 1087551 | A2 | 28-03-2001 | JP<br>US | 2001094510<br>6768872 | A<br>B1 | 06-04-2001<br>27-07-2004 |
| US | 2004179850 | A1 | 16-09-2004 | JP | 2004274615 | A | 30-09-2004 |

EPO FORM P0459

For more details about this annex : see Official Journal of the European Patent Office, No. 12/82